(19) Europäisches Patentamt
European Patent Office
Office européen des brevets

(11) **EP 3 002 263 B1**

(12) **EUROPEAN PATENT SPECIFICATION**

(45) Date of publication and mention
of the grant of the patent:
**22.05.2019 Bulletin 2019/21**

(51) Int Cl.:
***C03C 17/00*** (2006.01)    ***C08L 83/02*** (2006.01)
***C09D 183/02*** (2006.01)    ***C08K 5/05*** (2006.01)
***C08K 5/07*** (2006.01)

(21) Application number: **15180867.2**

(22) Date of filing: **13.08.2015**

(54) **SCRATCH AND ABRASION RESISTANT UV BLOCKING GLASS COATING**

KRATZ- UND ABRIEBFESTE UV-LICHT-BLOCKIERENDE GLASBESCHICHTUNG

REVÊTEMENT DE VERRE BLOQUANT LES UV, RÉSISTANT À L'ABRASION ET AUX RAYURES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.08.2014 US 201414466727**

(43) Date of publication of application:
**06.04.2016 Bulletin 2016/14**

(73) Proprietor: **Tru Vue, Inc.**
**Faribault, MN 55021 (US)**

(72) Inventors:
• **SHERWOOD, Philip William**
**Milford, CT Connecticut 06460 (US)**
• **KANNIAH, Vinod**
**Woodridge, IL Illinois 60517 (US)**
• **BRESHEARS, Jean Dee**
**Lockport, IL Illinois 60441 (US)**

(74) Representative: **Parker, Andrew James**
**Meissner Bolte Patentanwälte**
**Rechtsanwälte Partnerschaft mbB**
**Postfach 86 06 24**
**81633 München (DE)**

(56) References cited:
**WO-A1-2014/133748    US-A- 5 371 138
US-A1- 2009 004 482    US-A1- 2014 363 683**

**Description**

TECHNICAL FIELD

The present invention relates to UV blocking coatings for glass that are scratch and abrasion resistant, and to methods of producing the same.

The glass coatings may be used for applications which benefit from both UV blocking and scratch resistance, such as art displays, glazing for picture frames and photographs, architectural and window glazing, opthalmic lenses, automotive glass and sunglasses.

BACKGROUND

Organic polymer coatings, such as acrylics and urethanes, can efficiently block ultraviolet ("UV") radiation. However, organic polymer coatings can be soft and scratch easily, when compared to an uncoated glass surface. On the other hand, inorganic materials, such as vacuum deposited ceramic oxide optical coatings, can be hard and scratch resistant. Inorganic materials, however, do not efficiently block UV radiation and can result in an undesirable yellow appearance in various applications, including when used to glaze artwork.

Various methods can be used for making coatings for glass that protect against UV light. See, for example, U.S. Patent Nos. 4,495,360 and 4,122,233. The UV coatings can include a UV absorber that has compounds to absorb radiation of wavelengths starting in the near visible portion of the electromagnetic spectrum, which has a wavelength of around 400 nanometers, to the so-called vacuum ultraviolet portion of the spectrum, which can travel through a vacuum but is blocked by air and has a wavelength of around 200 nanometers in wavelength. These UV compounds can be used to protect items underlying transparent, semitransparent, and/or translucent substrates from the degradative effects of ultraviolet radiation absorption.

Various methods can be used for making abrasion-resistant coatings. See, for example, U.S. Patent Nos. 6,649,212 and 6,001,163. Hybrid sol gel or Ormosil coatings have been developed to combine features of both the organic polymer coatings and the inorganic coatings. Such hybrid sol-gel coatings can have better scratch resistance than organic polymer coatings and more effectively block UV light when compared to inorganic coatings. U.S. Patent No. 5,371,138 discloses a hybrid sol-gel UV blocking coating. This patent also discloses the uses of methyltrimethoxysilane (MTMS) as an inorganic binder and glycols as a stabilizer in uncured resin. Applications for the hybrid sol-gel coatings include, but are not limited to, glass panes in paintings, art prints, and the like. Currently, for art display applications, hybrid sol-gel coatings based upon a formulation of MTMS binder using glycols are not sufficiently scratch resistant and require careful and experienced handling, especially when cutting the coating glass with a hand or wall cutter, and during assembly of an art picture frame. Therefore, further development is needed to improve the scratch and abrasion resistance for the UV blocking glass coatings so that custom picture framers and art glass fabricators can more easily handle the coated glass products.

SUMMARY

Embodiments described herein may provide scratch and abrasion resistant UV blocking glass coatings and methods for preparing the coatings.

In one embodiment, a method is provided for preparing the coatings. In one embodiment, the method includes some of the following steps: (a) preparing a first blend of aqueous colloidal silica and a solvent with a boiling point of about 230°C or lower; (b) adding a bi-functional silanol coupling agent to the first blend to form a second blend; optionally (c) heating the second blend to a first elevated temperature such that the bi-functional silane coupling agent hydrolyzes to form a mixture of colloidal silica and a first silanol; (d) adding tetraethylorthosilicate (TEOS) to the mixture over a period of time to hydrolyze the TEOS to form a third blend of a second silanol, the first silanol, and the colloidal silica; (e) maintaining the third blend below a second elevated temperature, to avoid over-condensation of silanols; (f) adding a fourth blend to the third blend to form a fifth blend, the fourth blend including a UV absorber in the solvent; (g) casting the fifth blend onto a glass substrate; and (h) curing the fifth blend. Depending upon the ratio of ingredients, step (c) may be omitted.

In some embodiments, the fourth blend can further include dyes and/or flow agents in the solvent. The solvent of choice, which has a boiling point of 230°C or lower, is 2-propoxyethanol (2-PE), also known as ethylene glycol monopropyl ether or ethylene glycol propyl ether (EGPE). Other suitable additional solvents are volatile mono functional alcohols (like methanol, ethanol, propanol etc.,) and alpha-hydroxyl glycol ethers (like 2-propoxyl ethanol). Another additional suitable solvent is propylene glycol.

Any suitable bi-functional silanol coupling agent may be used. Suitable examples include glycidoxypropyltrimethoxysilane (GOPS, aka GPMS or GLYMO), or glycidoxypropyltriethoxysilane (GLEO), or isocyanatopropyltrimethoxysilane (Momentive A-1310). The UV absorber can be of the benzophenone, benzotriazole, or benzothiazole classes, such as Tinuvin 328, Tinuvin, 928, Tinuvin 1130, 2,2'-dihydroxybenzophenone, and includes 2,2',4,4'-tetrahydroxybenzophenone (BP-2). The method also includes blending each of the first blend, second blend, third blend, fourth blend, and the fifth blend at temperatures between 20°C and 50°C.

In another embodiment, a resin is provided for making abrasion and scratch resistant UV blocking glass coating. The resin includes an inorganic polysiloxane polymer matrix formed from water-based colloidal silica in an amount up to 40% by weight, and tetraethylorthosilicate (TEOS) ranging from 15% to 40% by weight. The resin can also include a bi-functional silanol coupling agent coupled to the inorganic polysiloxane polymer matrix, the coupling agent ranging from 5% to 15% by weight. The resin can further include a UV absorber conjugated to the bi-functional silanol coupling agent, where the UV absorber ranges from 3% to 7% by weight. The resin also includes a solvent up to 35% by weight with a boiling point of 230°C or lower, where the solvent is compatible with the colloidal silica, TEOS, bi-functional silanol agent, and UV absorber.

The solvent is a high boiling point alcohol in the form of 2-propoxyethanol (2-PE, aka ethylene glycol monopropyl ether or EGPE). The UV absorber can include a benzophenone, such as 2,2',4,4'-tetrahydroxybenzophenone (BP-2). The bi-functional silane coupling agent can be glycidoxypropyltrimethoxysilane (GLYMO), glycidoxypropyltriethoxysilane (GLYEO), and/or Momentive A-1130 (Nl-(3-trimethoxysilylpropyl)diethylenetriamine, sold as SILQUEST® A-1130 by MOMENTIVE® Performance Materials Inc. of Columbus, OH). The resin can include solvent-based colloidal silica ranging from about 0% to about 25% by weight, the solvent-based colloidal silica having about 20-40% SiO2 in the solvent. The resin can include solvent up to 30% by weight. The resin also can include water-based colloidal silica up to 40% by weight, the water-based colloidal silica being 20-40% SiO2 in water. The resin further includes TEOS of 15-40% by weight, UV absorber of 3-7% by weight, and the bi-functional silane coupling agent of 5-20% by weight. The resin can also include a flowing agent of 0-1% by weight, a red dye of 0-0.05% by weight, and a blue dye of 0-0.05% by weight.

In other embodiments, a method for preparing a coating composition is described herein, wherein the method includes: preparing a first blend of an aqueous colloidal silica and a water miscible solvent, the water miscible solvent being 2-PE; adding a bi-functional silanol coupling agent to the first blend to form a second blend; adding tetraethylorthosilicate (TEOS) to the second blend to form a third blend, wherein the molar ratio of TEOS to the bi-functional silanol is 30:70 to 40:60; adding a fourth blend to the third blend to form a fifth blend, the fourth blend comprising a UV absorber and the water miscible solvent; coating the coating composition onto a glass substrate; and heating the coated substrate to a surface temperature of 230°C to 500°C.

Also described herein is a coating composition to coat glass, the coating composition including an aqueous colloidal silica; a bifunctional silanol coupling agent; tetraethylorthosilicate (TEOS); a UV absorber; and a water miscible solvent wherein the molar ratio of the bi-functional silanol to TEOS is 70:30 to 60:40 and the water miscible solvent is 2-PE. In some such embodiments, the water miscible solvent also includes one or more of methanol, or diacetone alcohol. In some such embodiments, the UV absorber includes 2,2',4,4'-tetrahydroxybenzophenone. In some such embodiments, the bi-functional silane coupling agent includes a 3-glycidoxypropyltrialkoxysilane, a 3-isocyanatopropyltrialkoxysilane, or two or more thereof.

Also disclosed herein is a coated glass article comprising a cured resin composition disposed on at least a portion of a glass substrate, the cured resin composition derived by coating the coating composition onto at least a portion of a glass substrate to form a coated substrate; and heating the coated substrate to a surface temperature of 230°C to 500°C to form the coated glass article. The coating composition includes an aqueous colloidal silica; a bifunctional silanol coupling agent; tetraethylorthosilicate (TEOS); a UV absorber; and a water miscible solvent wherein the molar ratio of the bi-functional silanol to TEOS is 70:30 to 60:40 and the water miscible solvent is 2-PE. In some such embodiments,the coating has a scratch resistance of at least 90 mN and a loss of less than about 1% UV blocking ability after immersing the coated glass in boiling water for 10 minutes. In some such embodiments,the coating has a scratch resistance of at least 100 mN and a loss of less than about 1% UV blocking ability after immersing the coated glass in boiling water for 10 minutes.

Those skilled in the art would appreciate that many other compositions and coated articles also could be used and that embodiments of the invention are not limited to the embodiments discussed herein. Additional embodiments and features are set forth in part in the description that follows, and in part will become apparent to those skilled in the art upon examination of the specification or may be learned by the practice of the embodiments discussed herein. A further understanding of the nature and advantages of certain embodiments may be realized by reference to the remaining portions of the specification.

## BRIEF DESCRIPTION OF THE DRAWINGS

FIG. 1 is a flow chart illustrating steps for preparing resin in accordance with certain embodiments of the present disclosure.

FIG. 2 is an alternative flow chart illustrating steps for preparing resin in accordance with certain embodiments of the present disclosure.

DETAILED DESCRIPTION

The present disclosure may be understood by reference to the following detailed description. The present disclosure provides a hybrid inorganic-organic glass coating and method of preparing such a coating. The hybrid inorganic-organic glass coating is scratch resistant and also blocks UV radiation without adversely affecting the appearance of glazed artwork.

In one embodiment, the coating can include an inorganic polysiloxane polymer matrix made from colloidal silica and a tetraethylorthosilicate (TEOS) binder or primary monomer. The hard, inorganic TEOS matrix may be infused with a UV absorbing agent, such as a benzophenone which can conjugate to a bi-functional silanol coupling agent, for example, γ-glycidoxypropyltrimethoxysilane (or GOPS, aka GPMS, aka GLYMO). The resin formula using TEOS is compatible with other UV absorbers, and does not require bi-functional organic acids. The uncured resin can be diluted in a solvent, such as an alpha-hydroxy glycol or glycol ether, to stabilize the uncured resin. The cured coating, when cast on a glass is a film of about 1-5 μm thick, can block at least about 97% of the UV, and more preferably at least 99% of the UV in the wavelength ranging from about 300 nm to about 380 nm. The cured coating is also resistant to scratching, for example, with a metal stylus such as a paper clip, and does not mar when rubbed with fine steel wool, for example, grade #0000. Such tests are described in ASTM C1624 (Standard Test Method for Adhesion Strength and Mechanical Failure Modes of Ceramic Coatings by Quantitative Single Point Scratch), ASTM D7027 (Standard Test Method for Evaluation of Scratch Resistance of Polymeric Coatings and Plastics Using an Instrumented Scratch Machine), ASTM D7187 (Standard Test Method for Measuring Mechanistic Aspects of Scratch/Mar Behavior of Paint Coatings by Nanoscratching), and ASTM E2546 (Standard Practice for Instrumented Indentation Testing).

Generally, the resin can include one or more of colloidal silica, TEOS, an ultraviolet-absorbing material, such as 2, 2', 4, 4' tetrahydroxybenzophenone, a bi-functional silanol coupling agent, and an alpha-hydoxy solvent with a boiling point equal to about 230°C or lower, such as 2-propoxyethanol (2-PE, aka ethylene glycol monopropyl ether, EGPE). The addition of colloidal silica to the resin or coating composition can enhance the abrasion resistance of the cured coating composition, and can also contribute to the overall stability of the coating composition. TEOS can increase the cross-linking density of the cured film. The bi-functional silanol coupling agent can couple the UV absorber to the inorganic polysiloxane polymer matrix or blend of the colloidal silica and TEOS. The resin may also include a red dye and a blue dye for correcting the color of a film formed from the resin composition. The resin may further include a flowing agent, which can decrease viscosity of the uncured resin before casting on a glass substrate. The resin is cured. The coating then can be formed from the resin on the glass substrate.

The hybrid inorganic-organic coatings of the present disclosure combine the features of both organic polymer coatings and inorganic coatings. The hybrid inorganic-organic coating of the present disclosure both efficiently blocks UV radiation and is scratch resistant. The scratch and abrasion resistant coating of the present disclosure provides several benefits over the conventional coating, including that the coating is able to provide at least about 97% or higher protection from UV radiation without adversely impacting transmitted color, while still being hard and resistant to scratching. These coatings are useful for art display applications, because the art display needs to have very hard coatings so that the coatings do not scratch when placed into a metal wall cutter or assembled into a picture frame.

Process for Preparing Resin

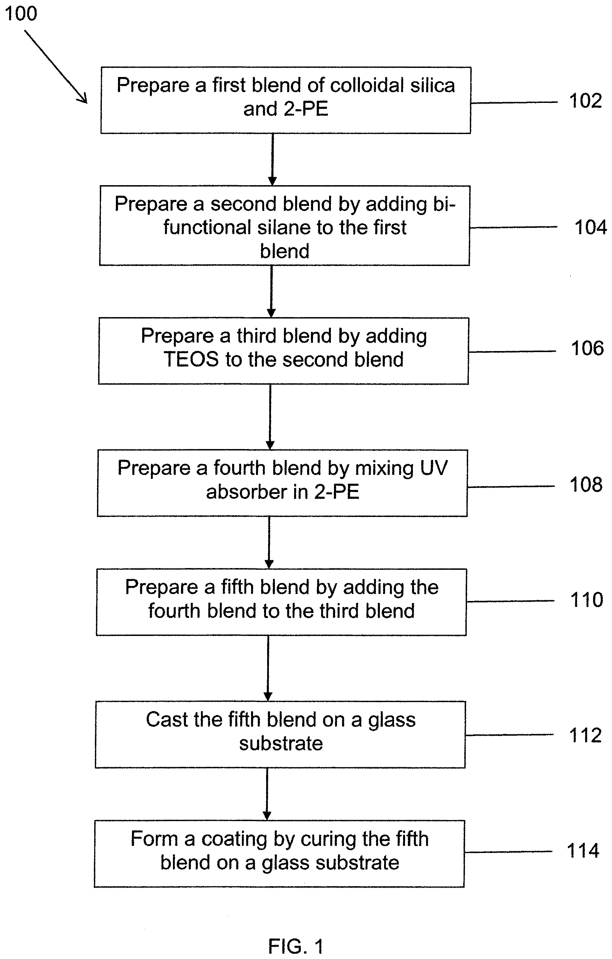

FIG. 1 is a flow chart illustrating the steps of certain embodiments of the invention for preparing a UV blocking and scratch resistance coating. Process 100 starts with preparing a first blend of colloidal silica and 2-PE at operation 102, followed by preparing a second blend by adding bi-functional silane coupling agent to the first blend at operation 104. The method continues with preparing a third blend by adding TEOS to the second blend at operation 106, and preparing a fourth blend by adding UV absorber to 2-PE at operation 108, followed by preparing a fifth blend by mixing the third blend and the fourth blend at operation 110. Once the resin or the fifth blend is prepared, the fifth blend can be cast on a glass substrate at operation 112 and cured on the glass substrate at an elevated temperature to form the UV blocking and scratch resistance coating at operation 114. Optionally, each of dyes or flow agent may be added to form the fourth blend with 2-PE and then mixed with the third blend.

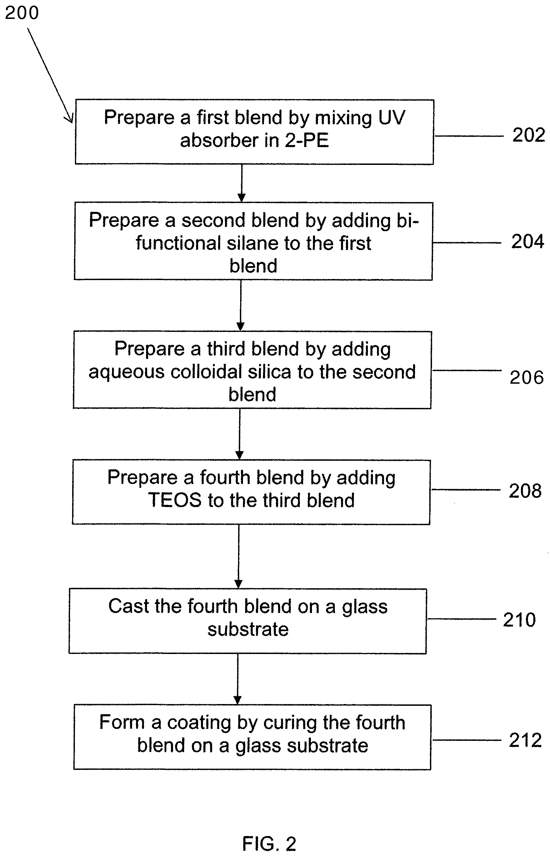

FIG. 2 is an alternative flow chart illustrating steps for preparing resin in accordance with certain embodiments of the present disclosure. Process 200 starts with preparing a first blend by mixing UV absorber in 2-PE at operation 202, followed by preparing a second blend by adding bi-functional silane coupling agent to the first blend at operation 204. The method continues with preparing a third blend by adding colloidal silica to the second blend at operation 206, and preparing a fourth blend by adding TEOS to the third blend at operation 208, followed by casting the fourth blend on a glass substrate at operation 210 and forming a coating by curing on the glass substrate at operation 212.

More specifically, the process for preparing the present resin includes the following steps: (a) Preparing a first blend aqueous colloidal silica (e.g. Nalco -1034A, available from Nalco Company of Naperville, IL, or Nissan ST-O-40, available from Nissan Chemical America Corporation of Houston, TX) with 2-PE, (b) Adding to the first blend a bi-functional silane coupling agent, such as GOPS, in one aliquot to form a second blend, (c) Allowing the second blend to warm to about 40°C, while the bi-functional silanol coupling agent such as GOPS hydrolyzes to form a mixture of a colloidal silica and a first silanol, (d) Adding TEOS to the second blend slowly over a period of about 1 hour to hydrolyze the TEOS to form a mixture of the first silanol (GOPS), a second silanol (hydrolyzed TEOS), and the colloidal silica, which is a third blend, (e) Keeping the third blend below about 50°C, to avoid over-condensation of silanols, (f) Separately, mixing each of the UV absorber, dyes, and flow agent with 2-PE to form a fourth blend, the fourth blend including UV absorber, optionally dyes, and flowing agent, (g) Adding the fourth blend to the third blend of silanols and colloidal silica to form a fifth blend, (h) Casting the fifth blend (uncured) onto a glass substrate to form glass coatings, and (i) Curing the fifth blend.

It is known in the art that TEOS is harder to process than MTMS. One challenge in the processing of TEOS is its solubility. Conventionally, the MTMS may be more attractive for use in the hybrid inorganic-organic coating due to its better solubility. Also, it is harder to chemically bond TEOS with UV absorber, such as BP-2. The present disclosure provides solutions to improve solubility of TEOS and the bonding with the UV absorber. The present process uses an alpha-hydroxy solvent such as 2-PE to improve solubility of TEOS. This solvent is compatible with each of the components in the resin, including colloidal silica, bi-functional silanol coupling agent, UV absorber, dyes, and flowing agents. Also, a bi-functional silanol coupling agent can couple the UV absorber to the TEOS, and may help improve chemical bonding of TEOS to the UV absorber.

Furthermore, a blending process may be used to provide uniform blending. The blending process may be controlled within a certain temperature range. In a particular embodiment, the blending temperature may not be too low, as higher temperature helps with better blending. Blending temperature should not be so high as to cause polymerization, which can affect viscosity and can affect scratch resistance. Blending temperatures may be between 30°C and 50°C to provide uniform blending while avoiding polymerization. During blending, some methanol and ethanol may be created by the hydrolysis reaction of TEOS and the bi-functional silanol coupling agent with water from the water-based colloidal silica, and may be lost by evaporation. The resin may be cured at a higher temperature to increase scratch resistance.

Colloidal silica may be water-based, for example, Nissan ST-O-40 (available from Nissan Chemical America Corporation of Houston, TX) containing about 40% silicon oxide ($SiO_2$) in water ($H_2O$). The water-based colloidal silica is up to 50% by weight, or 39% by weight, or 25% to 45% by weight, or 35% to 50% by weight of the composition prior to coating and curing the resin composition. Colloidal silica may be dispersed in an organic alpha-hydroxy solvent with relative lower boiling point, such as 2-propoxyethanol, for example, Nissan NPC-ST-30 (available from Nissan Chemical America Corporation of Houston, TX) containing about 30% $SiO_2$ in 2-propoxyethanol may be used. The solvent based colloidal silica may range from about 0% to about 30% by weight.

For preparing the resin composition, the primary solvent is 2-propoxyethanol (aka ethylene glycol monopropyl ether) in an amount up to 35% by weight of the uncured resin composition, or 5% to 30%, or 10% to 25%, or 15% to 20% by weight of the uncured resin composition. In some embodiments, the primary solvent is present at 17.0% to 18.0% by weight. In some embodiments, the primary solvent is present at 9% by weight of the uncoated or uncured resin composition. A secondary solvent may be used for help with the stability of the uncured resin. In some embodiments, the secondary solvent is methanol, or diacetone alcohol, present at or less than 20% by weight of the uncured resin composition, for example 0.5% to 10%, or 1% to 5% of the uncoated, uncured resin composition. In some embodiments, the secondary solvent is absent.

The primary silanol monomer is TEOS, or tetraethylorthosilicate. The amount of TEOS in the uncured resin composition ranges from 10% to 50% by weight, or 30% to 45%, or 35% to 40% by weight. The TEOS may be 20% to 25% by weight to provide proper cross-linking density for desired combination of abrasion resistance and water resistance after coating and curing.

The bi-functional silanol coupling agent may be used for coupling the UV absorber to the inorganic polysiloxane polymer matrix or blend of the colloidal silica and TEOS. The bi-functional silanol coupling agent may be γ-glycidoxypropyltrimethoxysilane (GOPS, also called GLYMO), isocyanatopropyltrimethoxysilane (IPTMS), or IPTMS that includes some uretidinedione and/or isocyanurate functionality. The bi-functional silanol coupling agent is present in the uncured resin composition at 5% to 15% by weight, for example 8% to 15% by weight, or 10% to 15% by weight, or 12% to 15% by weight in the uncured resin composition. In one embodiment, the bi-functional silanol coupling agent is GLYMO, present at 11.5% by weight in the uncured resin composition. In another embodiment, the bi-functional silanol coupling agent is GLYMO, present 13% to 14% by weight in the uncured resin composition.

The molar ratio of primary silanol monomer to bi-functional silanol coupling agent is 30:70 to 70:30, for example 35:65 to 60:40, or 40:60 to 50:50, or 30:70 to 60:40, or 25:75 to 50:50, or 30:70 to 40:60. The molar ratio of these two compounds is critical to impart the correct balance of scratch resistance and water resistance to the resulting coated articles.

The ultraviolet (UV) absorber may include 2,2',4,4'-tetrahydroxybenzophenone (BP-2), which ranges from 3% to 7% by weight of the coating composition. UV absorbers can exhibit a yellow hue or color when they are not fully dispersed. In the present disclosure, the UV absorber can react with the bi-functional silanol coupling agent, such as GLYMO. As a result, the present resin can eliminate the use of a bi-functional organic acid, such as a succinic acid or an itaconic acid, which could be used to react with the bi-functional silanol coupling agent. In embodiments, the UV absorber imparts UV blocking properties to a glass substrate on which it is coated.

The color effect of UV absorber may require correction by adding traces of dyes or tinting agents to correct the color. A first tinting agent may be added to the present resin to help correct for glass hue. The first tinting agent may include red dye. A second tinting agent may also be added to help correct for UV absorber hue. The second tinting agent may include blue dye. The effective amount of the first tinting agent may be controlled, for example, to around 0.024%, depending upon desired hue correction. The effective amount of the second tinting agent may be controlled, for example, to around 0.0063%, also depending upon desired hue correction.

The present resin may also include flow agent for viscosity control during the monomer reaction and curing stages of film preparation. Flow control or leveling agents can be higher molecular weight oligomers. Flow and leveling agent may use Dow Corning 190 fluid (also known as Xiameter 190). The flow control agents may impact the physical properties of the cured films, such as causing reduction in hardness or scratch and abrasion resistance. Therefore, the flow agent may be controlled to be at an effective amount, for example, about 0.10% by weight, which may vary with the application method.

Coating on Glass Substrate

The resin may be cast on a glass substrate to form a coated glass substrate. The coating is accomplished by techniques known to those of skill, such as roll coating, spin coating, or other casting or coating methods. The coating process, such as roll coating, may affect the quality of the film, including scratch and abrasion resistance, UV blocking, optical clarity, etc. After coating, the coated composition is cured by heating for a sufficient period of time to provide a cured composition. In embodiments, the coated substrates are heated to a surface temperature of at least 230°C to cause curing of the coating composition and drying. In some such embodiments, the coated substrates are heated to a surface temperature of 230°C to 500°C, or 250°C to 500°C, or 300°C to 500°C, 350°C to 500°C, 300°C to 450°C, 350°C to 450°C to provide a glass substrate having a cured composition coated thereon.

While the thickness of the cured coating is not particularly limited, we have found that a target final coating thickness of 0.5 $\mu$m to 5 $\mu$m, for example 1 $\mu$m to 4 $\mu$m, or 2 $\mu$m to 3 $\mu$m, is sufficient to impart UV blocking capability and also provide excellent scratch resistance and water resistance of the coating - that is, durable UV blocking capability. We have found that it is advantageous to provide high solids coating compositions, in part due to the high-boiling solvents employed in the coating compositions, and in part due to the fact that the silane or silanol coupling agents are liquids prior to cure and thus contribute to a lower viscosity composition for coating. Percent solids, defined herein as all coating composition components that are not solvent, is not particularly limited as to the coating compositions. However, we have found that in embodiments coating compositions are advantageously employed having 40 wt% to 97 wt% solids, for example 50 wt% to 95 wt% solids, or 60 wt % to 90 wt% solids, or 70 wt% to 95 wt% solids, or even 80 wt% to 95 wt% solids.

After heating, the coated glass substrates have durable UV blocking properties. As used herein, the term UV blocking means that at least 98%, for example 99% $\pm$ 0.5% of light having wavelengths of 300 nm to 380 nm is blocked from transmission through a coated glass article. Thus, for example, immersion of a coated glass article in boiling water for up to 10 minutes results in a loss of UV blocking ability of less than 1% of the initial amount of UV blocking of the coated glass article at the indicated wavelength. The coatings are highly abrasion/scratch resistant, wherein the normal load at which there is an adhesion failure of coating is at least about 90 mN.

The molar ratio of primary silanol monomer to bi-functional silanol coupling agent is 30:70 to 60:40, or 25:75 to 50:50, or 30:70 to 40:60 to impart the correct balance of scratch resistance and water resistance to the resulting coated articles. We have found that by increasing the amount of primary silanol monomer (TEOS and various hydrolysis and partially condensed analogs thereof), increased abrasion (scratch) resistance is developed in the cured coating on glass. However, along with improvements to abrasion resistance in such embodiments the coating becomes less water resistant. Thus, when placed in boiling water, the coated glass articles having a high ratio of TEOS to bi-functional silanol coupling agent suffer significant loss of UV blocking when compared to the UV blocking ability of the coated glass articles initially. By balancing the amount of TEOS with a suitable amount of bi-functional silanol coupling agent, we have found that scratch resistance of the coating (normal load at which there is an adhesion failure of coating) of at least 90 mN is achieved, and the coated glass can be immersed in boiling water for at least 10 minutes with less than 1% loss of UV blocking properties. Further, the coated glass samples subjected to 95% relative humidity at 50°C for at least 48 hours did not exhibit haze or delamination.

In conjunction with careful control of the molar ratio of TEOS and bi-functional silanol coupling agent in the coating compositions, we have found that the properties of the cured compositions are sensitive to the type of solvent employed in the coating compositions. More specifically, we have found that 2-propoxyethanol provides suitably stable coating composition formation and leads to cured coatings on glass having high abrasion resistance, excellent UV blocking durability, and excellent water resistance.

EXAMPLES

The following examples are presented as illustrations of forming coatings on a glass substrate by using the methods disclosed above. As can been seen from the following examples, the coatings described herein provide better mechanical properties, such as hardness, modulus, and scratch resistance, and still substantially maintain the UV resistance as conventional coatings.

The coatings were tested according to ASTM standard tests as mentioned earlier or other standard methods for hardness, modulus, scratch resistance, and UV resistance.

The coating of the present disclosure has improved bulk film properties compared to the conventional coatings. The bulk film properties of the present coating include a Young's Modulus ($E_r$) of around 20 GPa and an indentation hardness (H) of about 1.5 GPa when indented at less than 15% of the coating thickness. The indentation hardness may be measured with a 10 $\mu$m diameter diamond berkovich indenter tip. The bulk film properties also include a brittle index of about 0.07 for the present coating(brittle index is defined as a ratio of Hardness to Modulus). The mechanical properties further include critical loads to adhesion failure at an interface of a film to a substrate. The critical loads may be determined with a 10 $\mu$m radius cono-spherical diamond tip, and were found to be over about 100 mN. The critical loads correspond to the scratch/abrasion resistance of coated films along with the other bulk film properties

The mechanical properties, such as hardness, of the present invention, given their sol-gel type nature and optical functionality (UV blocking), are superior to those of cured films made from conventional alkoxy silane based precursors reported by [1] S. Nemeth, Y.C. Liu, Thin Solid Films, 517 (2009) 4888-4891; [2] L. Hu, X. Zhang, Y. Sun, R.J.J. Williams, Journal of Sol-Gel Science and Technology, 34 (2005) 41-46; and [3] L. Hu, X. Zhang, Y. Huang, Plastics, Rubbers and Composites, 33 (2004) 457-461], such as MTMS. Generally, the soda lime glass used as substrate for the coated articles reportedly has a hardness of 5.5 GPa, Young's modulus of 74 GPa, and a brittle index of around 0.075. As shown, coatings of the new invention can have a brittle index of about 0.07, a hardness of 1.5 GPa, and a Modulus of about 20 GPa. In addition, the "critical load of adhesion" is measured using a nano-scratch tester. The present coatings have critical loads ranging from 40 mN to 160 mN, normally greater than 100 mN. In contrast, the critical loads of the coatings of U.S. Patent No. 5,371,138 have critical loads around 40 mN, much lower than the critical loads of 100 mN to 160 mN.

The effects of the molar ratio of MTMS (methyltrimethoxysilane) or TEOS (tetraethylorthosilicate) to GLYMO, order of mixing, and addition of secondary solvents are explained through the following Examples. The composition details prior to casting and curing are shown in Table 1. The results of subjecting these compositions after casting and curing to the water boil test, humidity test and scratch test are shown in Table 2. For each example, the cured film thickness was controlled through coating application parameters.

The coating compositions of the Examples were mixed and reacted as described. The compositions were then cast by glass plates via roll coating and cured by heating the plates to a minimum surface temperature of 390°C. Target final coating thickness in all cases is 2.5 $\mu$m.

**Experimental Protocols**

*1. Coating and curing*

Plates of soda lime glass having dimensions of 28 cm x 35.6 cm x 0.23 cm were coated with the indicated compositions by roll coating. The nip compression was set to - 50.8 $\mu$m to -76.2 $\mu$m; drive and applicator roll speeds were set to 23 m/min with a doctor roll speed of 6 m/min. Target wet film thickness of the coatings was 5-7 $\mu$m. The coated films were then passed through a conveyor oven employing two panels of Raymax 1120 IR emitters (obtained from Watlow Electric Manufacturing Company of St. Louis, MO) operated at 16% - 20% output, resulting in final glass plate temperatures of between 390°C and 420°C. The plates were cooled in ambient laboratory conditions prior to testing.

Thickness of cured films was measured using a surface profilometer (Dektak 150, obtained from Bruker Corporation of Billerica, MA). A diamond stylus tip radii of 12.5 microns with a cone angle of 45° tip geometry was used in the analyses. The coating thickness after casting and curing was 2.5 $\pm$ 0.5 microns for all Examples.

In some cases, the glass plates were divided after coating in order to carry out one or more subsequent test protocols.

*2. Scratch resistance*

Scratch resistance, or critical load was measured using a nano-scratch tester NST from Anton Paar TriTec SA of Peseux, Switzerland for interfacial property of the coating in contact with glass. Critical load (mN) is defined as the normal load at which there is an adhesion failure of coating. A sphero-conical diamond tip of 10 micron radii with a cone angle of 90° tip geometry was used. The sum total of sample and measurement standard deviation was less than 10% of reported critical load values.

*3. Water Boil test*

Boil testing was carried out by immersing 10 cm x 10 cm coated and cured glass samples in water at 100°C for 10 mins. This test was performed as a measure of adhesion of coating on glass. UV blocking ability, that is, percent transmission of light having wavelengths of 300nm - 380 nm) was measured using a Lambda 750 UV/Vis Spectrometer (obtained from PerkinElmer Inc. of Waltham, MA) before and after the boiling to check for loss of UV blocking. The initial UV blocking value for all samples was 99% $\pm$ 0.5%, that is, transmission of UV radiation was 1% $\pm$ 0.5%. More than 1% loss of UV blocking value based on the initial reading resulted in a test rating of "fail." Percent removal is determined as:

$$\% \, UV \, blockage \, lost \, in \, water \, boil \, test = \frac{(Before-After)}{Before} \times 100$$

*4. Humidity test*

Humidity resistance was tested by subjecting a 10 cm x 10 cm coated glass sample at 50°C/95 % relative humidity for 48 hr, according to U.S. Military Specification MIL-C-48497A, para. 4.5.3.2. This test was performed as a measure of environmental exposure of the cured coating. Samples were rated pass/fail based on the extent of haziness or delamination. When placed on a black background, any observation of haze or delamination resulted in a test rating of "fail."

**Examples 1 - 4**

Coating compositions of Examples 1-4 were prepared according to order of mixing as shown in FIG.1, further as described in the section above entitled "Process for Preparing Resin", as it relates to FIG. 1. Compositional details are shown in Table 1.

The effect of Primary Silane:GLYMO molar ratio and order of mixing on water boil test, humidity test and scratch test are shown in Table 2. Examples 1 to 3 are comparative examples. All other examples are according to the invention.

**Examples 5 - 7**

Coating composition for Examples 5 - 7 were prepared according to order of mixing as shown in FIG.2, further as described in the section above entitled "Process for Preparing Resin", as it relates to FIG. 2. Compositional details are shown in Table 1.

The effect of Primary Silane:GLYMO molar ratio and order of mixing on water boil test, humidity test and scratch test are shown in Table 2.

**Table 1:** Resin coating composition of Examples 1-7. The UV absorber is 2,2',4,4'-tetrahydroxybenzophenone in all Examples.

| Example | 1 | 2 | 3 | 4 | 5 | 6 | 7 |
|---|---|---|---|---|---|---|---|
| Primary Silane | MTMS | TEOS | TEOS | TEOS | TEOS | TEOS | TEOS |
| Primary Silane mass (g) | 111 | 410 | 300 | 250 | 250 | 219 | 188 |
| GLYMO mass (g) | 114 | 88 | 133 | 153 | 153 | 165 | 178 |
| Silane: GLYMO % molar ratio | 40:60 | 65:35 | 50:50 | 40:60 | 40:60 | 35:65 | 30:70 |

(continued)

| Example | 1 | 2 | 3 | 4 | 5 | 6 | 7 |
|---|---|---|---|---|---|---|---|
| 37% HCl mass (g) | 1 | 1 | 1 | 1 | 2 | 2 | 2 |
| Colloidal silica | NPC-ST-30 and N1034A | Nissan ST-O-40 and MA-ST | Nissan ST-O-40 | Nissan ST-O-40 | Nissan ST-O-40 | Nissan ST-O-40 | Nissan ST-O-40 |
| Colloidal silica mass (g) | 423 | 492 | 450 | 450 | 450 | 450 | 450 |
| UV absorber mass (g) | 51 | 70 | 70 | 64 | 64 | 64 | 64 |
| Primary solvent | Hexylene glycol | 2-PE | 2-PE | 2-PE | 2-PE | 2-PE | 2-PE |
| Primary solvent mass (g) | 195 | 100 | 100 | 100 | 136 | 136 | 136 |
| Secondary solvent | Propylene glycol | 2-PE | 2-PE | 2-PE | 2-PE | 2-PE | 2-PE |
| Secondary solvent mass (g) | 82 | 100 | 100 | 100 | 64 | 64 | 64 |
| Total mass (g) | 977 | 1261 | 1154 | 1118 | 1119 | 1100 | 1082 |

**Table 2:** Effect of Primary Silane : GLYMO ratio and order of mixing

| Examples | Silane (%) | Coupling agent (%) | Order of mixing | Water boil test (Pass/Fail) | Humidity test (Pass/Fail) | Scratch resistance (mN) |
|---|---|---|---|---|---|---|
| 1 | MTMS (40) | GLYMO (60) | Fig. 1 | Pass | Pass | 40 |
| 2 | TEOS (65) | GLYMO (35) | Fig. 1 | Fail | Fail | 150 |
| 3 | TEOS (50) | GLYMO (50) | Fig. 1 | Fail | Fail | 100 |
| 4 | TEOS (40) | GLYMO (60) | Fig. 1 | Pass | Pass | 115 |
| 5 | TEOS (40) | GLYMO (60) | Fig. 2 | Pass | Pass | 110 |
| 6 | TEOS (35) | GLYMO (65) | Fig. 2 | Pass | Pass | 105 |
| 7 | TEOS (30) | GLYMO (70) | Fig. 2 | Pass | Pass | 80 |

Having described several embodiments, it will be recognized by those skilled in the art that various modifications, alternative constructions, and equivalents may be used without departing from the disclosure. Additionally, a number of well-known processes and elements have not been described in order to avoid unnecessarily obscuring the embodiments disclosed herein. Accordingly, the above description should not be taken as limiting the scope of the document. Those skilled in the art will appreciate that the presently disclosed embodiments teach by way of example and not by limitation. Therefore, the matter contained in the above description or shown in the accompanying drawings should be interpreted as illustrative and not in a limiting sense. The following claims are intended to cover all generic and specific features described herein, as well as all statements of the scope of the present method and system, which, as a matter of language, might be said to fall therebetween.

**Claims**

1. A method for preparing a coating, the method comprising:

   preparing a first blend of an aqueous colloidal silica and a water miscible solvent comprising 2-propoxyethanol
   adding a bi-functional silanol coupling agent to the first blend to form a second blend;
   adding tetraethylorthosilicate (TEOS) to the second blend to form a third blend, wherein the molar ratio of TEOS to the bi-functional silanol is 30:70 to 40:60;
   adding a fourth blend to the third blend to form a fifth blend, the fourth blend comprising a UV absorber and the water miscible solvent;
   coating the coating composition onto a glass substrate; and
   heating the coated substrate to a surface temperature of 230°C to 500°C.

2. The method of claim 1 further comprising heating the second blend to a first elevated temperature.

3. The method of any one of the preceding claims further comprising maintaining the third blend below a second elevated temperature.

4. The method of any one of the preceding claims wherein the coating thickness is 2.5 $\mu$m $\pm$ 0.5 $\mu$m.

5. The method of any one of the preceding claims further comprising blending each of the first blend, second blend, third blend, fourth blend, and fifth blend at a temperature between 30°C and 50°C.

6. The method of any one of the preceding claims wherein the third blend is formed by addition of TEOS to the second blend over about one hour.

7. A coating composition comprising
   an aqueous colloidal silica;
   a bifunctional silanol coupling agent;
   tetraethylorthosilicate (TEOS);
   a UV absorber; and
   a water miscible solvent comprising 2-propoxyethanol, wherein the molar ratio of the bi-functional silanol to TEOS is 70:30 to 60:40.

8. The composition of claim 7 wherein the water miscible solvent further comprises, methanol or diacetone alcohol.

9. The composition of either of claims 7 or 8 wherein the UV absorber comprises 2,2',4,4' -tetrahydroxybenzophenone.

10. The composition of any one of claims 7 to 9 wherein the bi-functional silane coupling agent comprises a 3-glycidoxypropyltrialkoxysilane, a 3-isocyanatopropyltrialkoxysilane, or two or more thereof.

11. The composition of any one of claims 7 to 10 further comprising a dye, a flow agent, or both.

12. A coated glass article comprising a cured resin composition disposed on at least a portion of a glass substrate, the cured resin composition derived by

   coating the coating composition of any of claims 7-11 onto at least a portion of a surface of a glass substrate to form a coated substrate; and
   heating the coated substrate to a surface temperature of 230°C to 500°C to form the coated glass article.

13. The coated glass article of claim 12 wherein the coating has a scratch resistance of at least 90 mN and a loss of less than 1% UV blocking ability after immersing the coated glass in boiling water for 10 minutes.

14. The coated glass article of either of claims 12 or 13 wherein the coating has a scratch resistance of at least 100 mN and a loss of less than 1% UV blocking ability after immersing the coated glass in boiling water for 10 minutes.

**Patentansprüche**

1. Verfahren zum Herstellen einer Beschichtung, wobei das Verfahren umfasst:

   Herstellen einer ersten Mischung einer wässrigen kolloidalen Kieselsäure und eines wassermischbaren Lösungsmittels, umfassend 2-Propoxyethanol, Zugeben eines bifunktionellen Silanolkupplungsagens zu der ersten Mischung, um eine zweite Mischung zu bilden;
   Zugeben von Tetraethylorthosilikat (TEOS) zu der zweiten Mischung, um eine dritte Mischung zu bilden, wobei das molare Verhältnis von TEOS zu dem bifunktionellen Silanol 30:70 bis 40:60 beträgt;
   Zugeben einer vierten Mischung zu der dritten Mischung, um eine fünfte Mischung zu bilden, wobei die vierte Mischung ein UV-Absorbtionsmittel und das wassermischbare Lösungsmittel umfasst;
   Auftragen der Beschichtungszusammensetzung auf ein Glassubstrat; und
   Erwärmen des beschichteten Substrates auf eine Oberflächentemperatur von 230°C bis 500°C.

2. Verfahren nach Anspruch 1, ferner umfassend ein Erwärmen der zweiten Mischung auf eine erste erhöhte Temperatur.

3. Verfahren nach irgendeinem der vorherigen Ansprüche, ferner umfassend ein Halten der dritten Mischung unterhalb einer zweiten erhöhten Temperatur.

4. Verfahren nach irgendeinem der vorherigen Ansprüche, wobei die Beschichtungsdicke 2,5 $\mu$m $\pm 0,5$ $\mu$m beträgt.

5. Verfahren nach irgendeinem der vorherigen Ansprüche, ferner umfassend ein Mischen jeweils der ersten Mischung, der zweiten Mischung, der dritten Mischung, der vierten Mischung und der fünften Mischung bei einer Temperatur zwischen 30°C und 50°C.

6. Verfahren nach irgendeinem der vorherigen Ansprüche, wobei die dritte Mischung durch Zugabe von TEOS zu der zweiten Mischung über etwa eine Stunde gebildet wird.

7. Beschichtungszusammensetzung, umfassend
   eine wässrige kolloidale Kieselsäure;
   ein bifunktionelles Silanolkupplungsagens;
   Tetraethylorthosilikat (TEOS);
   ein UV-Absorbtionsmittel; und
   ein wassermischbares Lösungsmittel, umfassend 2-Propoxyethanol,
   wobei das molare Verhältnis des bifunktionellen Silanols zu TEOS 70:30 bis 60:40 beträgt.

8. Zusammensetzung nach Anspruch 7, wobei das wassermischbare Lösungsmittel ferner Methanol oder Diacetonalkohol umfasst.

9. Zusammensetzung nach einem der Ansprüche 7 oder 8, wobei das UV-Absorbtionsmittel 2,2',4,4'-Tetrahydroxybenzophenon umfasst.

10. Zusammensetzung nach irgendeinem der Ansprüche 7 bis 9, wobei das bifunktionelle Silanolkupplungsagens ein 3-Glycidoxypropyltrialkoxysilan, ein 3-Isocyanatopropyltrialkoxysilan oder zwei oder mehr davon umfasst.

11. Zusammensetzung nach irgendeinem der Ansprüche 7 bis 10, ferner umfassend einen Farbstoff, ein Fließmittel oder beides.

12. Beschichteter Glasartikel, umfassend eine gehärtete Harzzusammensetzung, angeordnet auf mindestens einem Abschnitt eines Glassubstrates, wobei die gehärtete Harzzusammensetzung hergeleitet ist durch

   Auftragen der Beschichtungszusammensetzung nach irgendeinem der Ansprüche 7-11 auf zumindest einen Abschnitt einer Oberfläche eines Glassubstrates, um ein beschichtetes Substrat zu bilden; und
   Erwärmen des beschichteten Substrates auf eine Oberflächentemperatur von 230°C bis 500°C, um den beschichteten Glasartikel zu bilden.

13. Beschichteter Glasartikel nach Anspruch 12, wobei die Beschichtung eine Kratzfestigkeit von mindestens 90 mN und, nach Eintauchen des beschichteten Glases in kochendes Wasser für 10 Minuten, einen Verlust an Vermögen, UV zu blockieren, von weniger als 1% aufweist.

14. Beschichteter Glasartikel nach einem der Ansprüche 12 oder 13, wobei die Beschichtung eine Kratzfestigkeit von mindestens 100 mN und, nach Eintauchen des beschichteten Glases in kochendes Wasser für 10 Minuten, einen Verlust an Vermögen, UV zu blockieren, von weniger als 1% aufweist.

**Revendications**

1. Procédé pour préparer un revêtement, le procédé comprenant les étapes consistant à :

préparer un premier mélange d'une silice colloïdale en solution aqueuse et d'un solvant miscible avec l'eau comprenant du 2-propoxyéthanol,
ajouter un agent de couplage de type silanol bifonctionnel au premier mélange pour former un deuxième mélange ;
ajouter de l'orthosilicate de tétraéthyle (TEOS) au deuxième mélange pour former un troisième mélange, le rapport molaire du TEOS au silanol bifonctionnel étant de 30:70 à 40:60 ;
ajouter un quatrième mélange au troisième mélange pour former un cinquième mélange, le quatrième mélange comprenant un absorbeur UV et le solvant miscible avec l'eau ;
revêtir un substrat en verre avec la composition de revêtement ; et
chauffer le substrat revêtu à une température de surface de 230°C à 500°C.

2. Procédé selon la revendication 1, comprenant en outre l'étape consistant à chauffer le deuxième mélange à une première température élevée.

3. Procédé selon l'une quelconque des revendications précédentes, comprenant en outre l'étape consistant à maintenir le troisième mélange au dessous d'une deuxième température élevée.

4. Procédé selon l'une quelconque des revendications précédentes, dans lequel l'épaisseur de revêtement est de 2,5 $\mu$m $\pm$ 0,5 $\mu$m.

5. Procédé selon l'une quelconque des revendications précédentes, comprenant en outre l'étape consistant à mélanger chacun du premier mélange, du deuxième mélange, du troisième mélange, du quatrième mélange et du cinquième mélange à une température comprise entre 30°C et 50°C.

6. Procédé selon l'une quelconque des revendications précédentes, dans lequel le troisième mélange est formé par addition de TEOS au deuxième mélange sur environ une heure.

7. Composition de revêtement comprenant :

une silice colloïdale en solution aqueuse ;
un agent de couplage de type silanol bifonctionnel ;
de l'orthosilicate de tétraéthyle (TEOS) ;
un absorbeur UV ; et
un solvant miscible avec l'eau comprenant du 2-propoxyéthanol,
dans laquelle le rapport molaire du silanol bifonctionnel au TEOS est de 70:30 à 60:40.

8. Composition selon la revendication 7, dans laquelle le solvant miscible avec l'eau comprend en outre du méthanol ou du diacétone-alcool.

9. Composition selon l'une ou l'autre des revendications 7 et 8, dans laquelle l'absorbeur UV comprend de la 2,2',4,4'-tétrahydroxybenzophénone.

10. Composition selon l'une quelconque des revendications 7 à 9, dans laquelle l'agent de couplage de type silane bifonctionnel comprend un 3-glycidoxypropyltrialkoxysilane, un 3-isocyanatopropyltrialkoxysilane, ou deux ou plus de ceux-ci.

11. Composition selon l'une quelconque des revendications 7 à 10, comprenant en outre un colorant, un agent d'écoulement, ou les deux.

12. Article en verre revêtu comprenant une composition de résine durcie disposée sur au moins une partie d'un substrat en verre, la composition de résine durcie étant dérivée par les étapes consistant à :

revêtir au moins une partie d'une surface d'un substrat en verre avec la composition de revêtement de l'une quelconque des revendications 7 à 11 pour former un substrat revêtu ; et
chauffer le substrat revêtu à une température de surface de 230°C à 500°C pour former l'article en verre revêtu.

13. Article en verre revêtu selon la revendication 12, dans lequel le revêtement a une résistance aux rayures d'au moins 90 mN et une perte de capacité de blocage des UV inférieure à 1 % après immersion du verre revêtu dans de l'eau bouillante pendant 10 minutes.

14. Article en verre revêtu selon l'une ou l'autre des revendications 12 et 13, dans lequel le revêtement a une résistance aux rayures d'au moins 100 mN et une perte de capacité de blocage des UV inférieure à 1 % après immersion du verre revêtu dans de l'eau bouillante pendant 10 minutes.

100

```
┌──────────────────────────────┐
│  Prepare a first blend of     │
│  colloidal silica and 2-PE    │———— 102
└──────────────────────────────┘
              │
              ▼
┌──────────────────────────────┐
│  Prepare a second blend by    │
│  adding bi-functional silane  │———— 104
│  to the first blend           │
└──────────────────────────────┘
              │
              ▼
┌──────────────────────────────┐
│  Prepare a third blend by     │
│  adding TEOS to the second    │———— 106
│  blend                        │
└──────────────────────────────┘
              │
              ▼
┌──────────────────────────────┐
│  Prepare a fourth blend by    │
│  mixing UV absorber in 2-PE   │———— 108
└──────────────────────────────┘
              │
              ▼
┌──────────────────────────────┐
│  Prepare a fifth blend by     │
│  adding the fourth blend to   │———— 110
│  the third blend              │
└──────────────────────────────┘
              │
              ▼
┌──────────────────────────────┐
│  Cast the fifth blend on a    │
│  glass substrate              │———— 112
└──────────────────────────────┘
              │
              ▼
┌──────────────────────────────┐
│  Form a coating by curing the │
│  fifth blend on a glass       │———— 114
│  substrate                    │
└──────────────────────────────┘
```

FIG. 1

200

Prepare a first blend by mixing UV absorber in 2-PE — 202

Prepare a second blend by adding bi-functional silane to the first blend — 204

Prepare a third blend by adding aqueous colloidal silica to the second blend — 206

Prepare a fourth blend by adding TEOS to the third blend — 208

Cast the fourth blend on a glass substrate — 210

Form a coating by curing the fourth blend on a glass substrate — 212

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4495360 A
- US 4122233 A
- US 6649212 B
- US 6001163 A
- US 5371138 A

**Non-patent literature cited in the description**

- **S. NEMETH ; Y.C. LIU.** *Thin Solid Films,* 2009, vol. 517, 4888-4891
- **L. HU ; X. ZHANG ; Y. SUN ; R.J.J. WILLIAMS.** *Journal of Sol-Gel Science and Technology,* 2005, vol. 34, 41-46
- **L. HU ; X. ZHANG ; Y. HUANG.** *Plastics, Rubbers and Composites,* 2004, vol. 33, 457-461